Europäisches Patentamt

**European Patent Office**

Office européen des brevets

(11) Publication number: **0 211 612**
A2

(12)

# EUROPEAN PATENT APPLICATION

(21) Application number: **86305862.4**

(22) Date of filing: **30.07.86**

(51) Int. Cl.⁴: **G 05 D 11/13**

(30) Priority: **31.07.85 US 761062**

(43) Date of publication of application:
**25.02.87 Bulletin 87/9**

(84) Designated Contracting States:
**AT BE CH DE FR GB IT LI LU NL SE**

(71) Applicant: **Cool Water Coal Gasification Program**
**2244, Walnut Grove Avenue**
**Rosemead California 91770(US)**

(72) Inventor: **Broadway, Eugene Hodge**
**932 Pinon Drive**
**Barstow California(US)**

(74) Representative: **Williams, Trevor John et al,**
**J.A. KEMP & CO. 14 South Square Gray's Inn**
**London WC1R 5EU(GB)**

(54) **Method and apparatus for controlling a fluid mixture ratio.**

(57) An apparatus and method for controlling the fluid mixture ratio comprising a means for comparing the demand for the final mixture with desired flow rates and flow rates of the components such that when the demand increases the flow rate of one of the fluid components is preferentially increased and when the demand decreases, the flow rate of the other fluid component is preferentially decreased, thus ensuring that the final ratio of the one fluid to the other fluid will either not exceed or fall below a desired ratio.

EP 0 211 612 A2

./...

FIG. 3

METHOD AND APPARATUS FOR CONTROLLING

A FLUID MIXTURE RATIO                    **0211612**

BACKGROUND OF THE INVENTION

The present invention is in the field of apparatus for controlling the ratio of the components in a fluid mixture. More specifically, the invention pertains to a control system for ensuring that the ratio of the components of a fluid mixture will not exceed or fall below a predetermined maximum or minimum ratio.

There are many instances where it is desirable to control the ratio of the components of a fluid mixture. The most common applications relate to the mixing of various gases for combustion and to the blending of various chemicals. The prior art systems for controlling the ratios of the components are generally only capable of controlling the ratio within a band or tolerance around the desired ratio. When there is a change in the demand for the resulting mixture sometimes referred to as a load level change, the final ratio will generally vacillate around the desired ratio. The width of the band around the desired ratio can vary with the system used. The variations are the result of the overall design and placement of the controllers and the minimum band that can be obtained generally relates to the precision and accuracy of the particular controllers employed. These systems can not however ensure that the final ratio will not exceed the desired maximum ratio or will not fall below a desired minimum ratio.

In certain applications it has become desirable to not only control the ratio of the components but also to ensure that upon a load level change the ratio of the fluids will not exceed or fall below a predetermined desired maximum or minimum ratio. One particular application where this has become especially desirable is in the manufacture of synthetic coal gas. In the manufacture of synthetic coal gas there is an optimum range for the reaction temperature of the gasifier. If the reaction temperature is allowed to rise above the maximum temperature of that range, the equipment begins to suffer from certain undesirable effects such as degradation of the gasifier refractory as a result of the slag penetrating the material causing it to undergo spallation. Conversely, if the reaction temperature is allowed to drop below the minimum temperature of the optimum temperature range, the gasification process suffers causing problems such as in the handling of the slag. The problems caused by low reaction temperatures are more easily handled and generally do not result in excessive wear on the costly equipment as do reaction temperatures that exceed the maximum temperature of the optimum range. Thus it is desirable to prevent the reaction temperature from exceeding a certain maximum temperature.

The reaction temperature is highly dependent on and proportional to the ratio of the oxygen to the fuel (which is a coal slurry) flowing to the reaction chamber. As such it is so. Nor does the system described in Pool guarantee that the final ratio will not fall below a desired ratio. Such a system is unsuitable for use in the manufacture of synthetic gas.

SUMMARY OF THE INVENTION

The present invention pertains to apparatus for controlling the ratio of the components in a fluid mixture. The apparatus of the present invention provides for a control system for controlling the mixture of two fluids such that the ratio of one fluid to the other remains substantially constant and the final ratio will either not exceed or fall below a desired ratio.

The final ratio of the component fluids in a mixture is maintained by the present invention in such a fashion that the final ratio of the fluids will not exceed or fall below a desired ratio while still maintaining the final ratio substantially constant. The invention comprises a means for comparing the demand for the final mixture with desired flow rates and flow rates of the components such that when the demand increases the flow rate of one of the fluid components is preferentially increased and when the demand decreases, the flow rate of the other fluid component is preferentially decreased, thus ensuring that the final ratio of the one fluid to the other fluid will either not exceed or fall below a desired ratio.

The invention includes a means for determining the flow rates of a first fluid and a second fluid whose ratio is to be controlled and a means for inputting the desired ratio. The desired flow rates of the fluids are determined by comparing the actual flow rates with the desired ratio through some appropriate means. A means for inputting the demand for the final mixture is included with a means for comparing the demand with the desired flow rate of the second fluid and outputting to a control means capable of adjusting the flow rate of the second fluid until the flow rate of the second fluid is substantially the same as the output.

The flow rate of the second fluid is inputted along with the demand to a means for comparing the two and comparing the output the desired ratio by an appropriate means to determine the desired flow rate of the first fluid. The desired flow rate is inputted to another control means capable of adjusting the flow rate of the first fluid until the flow rate is substantially the same as the desired flow rate.

As a result the ratio of the fluids are maintained nearly constant and the ratio of the fluids can be set to either not exceed or fall below a desired ratio. Accordingly it is an object of the present invention to provide an apparatus and method for controlling the ratio of a fluid mixture such that the ratio of the components of the fluid mixture remains nearly constant and the final ratio will either not exceed or fall below a desired ratio. Other and further objects and advantages will appear hereafter.

BRIEF DESCRIPTION OF THE DRAWINGS

Figure 1 is a schematic of a preferred embodiment of the present invention such that the final ratio will not exceed a desired ratio.

Figure 2 is a schematic of a preferred embodiment of the present invention such that the final ratio will not fall below a desired ratio.

Figure 3 is a schematic of a control system for a coal gasification process incorporating the present invention.

DETAILED DESCRIPTION OF THE DRAWINGS

The control of the ratio of fluid components in a final mixture is a dynamic operation. For ease in understanding the apparatus and method the following description of the preferred embodiments is done from a static point of view. It should be kept in mind that in actual use the signal values will be constantly changing in response to load level demand changes.

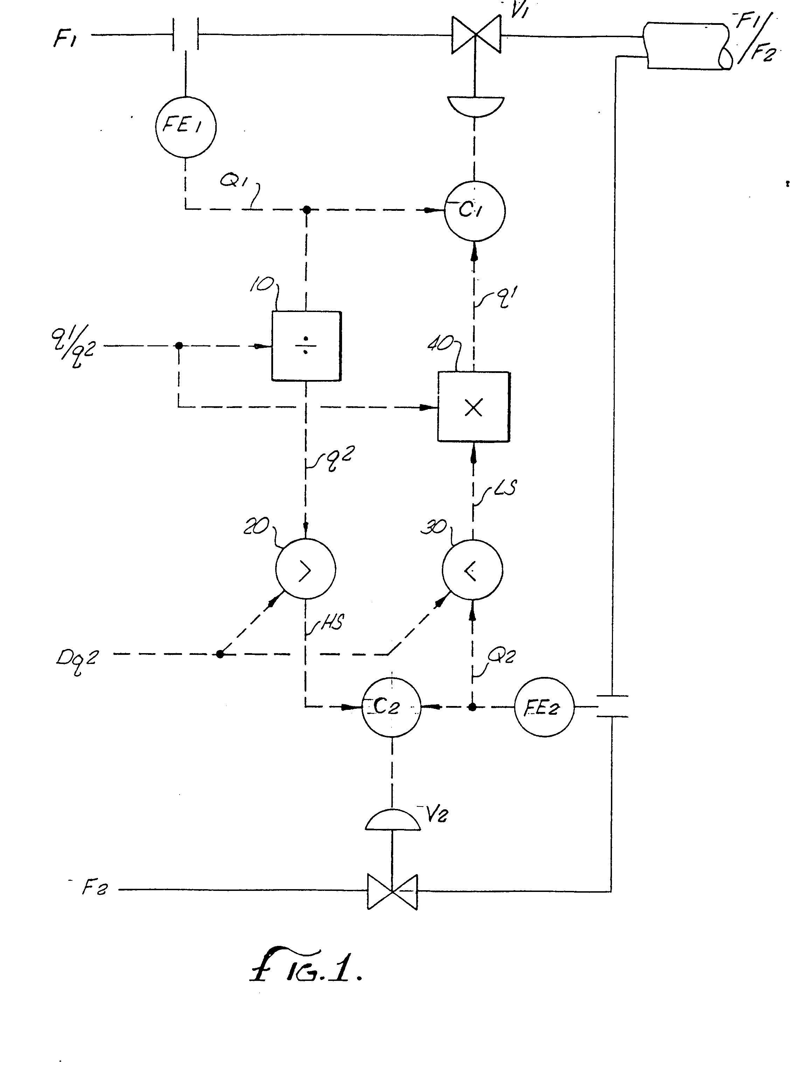

Referring to Figure 1, a control system for ensuring that the final ratio of two components in a mixture will not exceed a desired maximum ratio is described. A first fluid F1 and second fluid F2 are the two components that are combined to form a fluid mixture having a final ratio F1/F2. In this system changes in demand for the fluid mixture are based upon the flow rate of the second fluid. The method for determining the demand for the second fluid and generating a demand signal Dq2 can be accomplished through any conventional means and as would be obvious to those skilled in the art, will vary depending upon the application. For example, a pressure transducer can be employed to determine when demand for the fluid had increased or decreased based upon the change in pressure in a supply pipe. The transducer would then transmit an appropriate signal to a standard controller. The controller can be either pneumatic, electric or hydraulic, so long as it is capable of outputting an appropriate scaled signal indicating the increase or decrease in pressure, which in turn reflects the change in demand.

The desired maximum ratio is dependent upon the application and the determination of the maximum ratio and generation of the maximum ratio signal q1/q2 would be obvious to those skilled in the art. The method of determining the maximum ratio in the manufacture of synthetic coal gas is described more fully below.

A suitable means for determining the flow rate of the first fluid is employed. In the preferred embodiment a first flow meter FE1 is employed. The first flow meter FE1 generates a first flow rate signal Q1 representative of the first fluid flow rate. The flow meter may be of any conventional type such as a magnetic flow meter, a differential pressure transmitter across an orifice or a pressure and temperature compensated flow
measurement device.

The first flow rate signal Q1 is inputted to a means for
dividing the first flow rate signal Q1 by the maximum ratio q1/q2
and determining the desired flow rate of the second fluid F2 and
establishing a second fluid desired flow rate signal q2. In the
preferred embodiment a divider 10 is employed to determine the
second fluid desired flow rate signal q2. The divider 10 can be
any standard analog module capable of performing a divide
function. For example, a standard xy/z multiplier/divider module
can be utilized with the y input set to unity.

The first flow rate signal Q1 is also inputted to a
means for controlling the flow rate of the first fluid F1. In
the preferred embodiment a first control valve comprising a first
controller C1 and a first valve V1 is employed. The controller
C1 can be any standard type of controller capable of integral and
proportional band control as outlined above, such as a pneumatic
controller with a 3 to 15 psi output.

The second fluid desired flow rate signal q2 and the
demand signal Dq2 are inputted to a means for determining the
greater of the second fluid desired flow rate signal q2 and the
demand signal Dq2. In the preferred embodiment a first high/low
signal selector 20 is employed to determine the greater of the
two signals. The first high/low signal selector 20 outputs the
greater of the two signals establishing a high signal HS. The
first high/low signal selector 20 can be any standard analog
module capable of selecting the greater of two input signals and
outputting a signal scaled to the greater of the two signals. A
high/low signal selector analog module set for high select would
be appropriate.

The high signal HS is inputted to a means for controlling the flow rate of the second fluid F2. The means for controlling the flow rate of the second fluid F2 in the preferred embodiment is a second control valve comprising a second controller C2 and a second valve V2. As with the first controller C1, the second controller can be any conventional type of controller and the second valve V2 can be any type of automatic control valve.

A suitable means for determining the flow rate of the second fluid F2 establishes a second flow rate signal Q2 representative of the flow rate of the second fluid F2. In the preferred embodiment a second flow meter FE2 is employed. As with the first flow meter FE1, any standard flow measuring device compatible with the rest of the system can be utilized. The second flow rate signal Q2 is inputted along with the high signal HS to controller C2. In response to those signals controller C2 adjusts the flow rate of the second fluid F2 by opening or closing second valve V2 until the second flow rate signal Q2 is substantially the same as the high signal HS.

The second flow rate signal Q2 and the demand signal Dq2 are both inputted to a means for determining the lesser of the demand signal Dq2 and the second flow rate signal Q2 establishing a low signal LS. In the preferred embodiment a second high/low signal selector 30 establishes the low signal LS. The second high/low signal selector 30 can be of any conventional analog module design capable of comparing two signals and outputting a signal representative of the lesser of the two input signals. A high/low signal selector analog module set for low select can be employed.

The low signal LS and the maximum ratio signal q1/q2 are inputted to a means capable of multiplying the two signals and establishing the first fluid desired flow rate signal q1. In the preferred embodiment a multiplier 40 is employed to establish the first fluid flow rate signal q1. As with the divider 10 any standard analog module capable of multiplying the inputs can be utilized. A standard xy/z multiplier/divider with the z input set to unity can be employed.

The first fluid desired flow rate signal q1 and the first flow rate signal Q1 are inputted to controller C1 which adjusts the flow rate of the first fluid F1 through first valve V1 such that the first flow rate signal Q1 is substantially the same as the first fluid desired flow rate signal q1.

When the system is in equilibrium the demand signal Dq2, the second fluid desired flow rate q2 and the second flow rate Q2 are equal and the final mixture ratio F1/F2 is equal to the maximum ratio q1/q2. During operation, in response to load level changes which increase the demand signal Dq2 making it greater than the second fluid desired flow rate signal q2, the first high/low signal selector 20 will output a high signal HS representative of the new demand signal Dq2 to the second controller C2. The second controller C2 will send a signal to the second valve V2, opening the second valve V2, increasing the flow rate of the second fluid F2. The second flow meter FE2 will observe this change and send the new second flow rate signal Q2 to the second controller C2. The second controller C2 and the second valve V2 will continue to operate to increase the flow rate of the second fluid F2 until the high signal HS and the second flow rate Q2 are substantially the same.

As the second flow rate signal Q2 increases, the second high/low signal selector 30 will compare it to the demand signal Dq2 and send a new low signal LS to the multiplier 40. Since the demand has increased the demand signal Dq2 will be greater than the second flow rate signal and the low signal selector 30 will output a signal representative of the second flow rate signal Q2. This ensures that the flow rate of the second fluid F2 will increase before the flow rate of the first fluid F1 when there is an increase in demand. Thus, ensuring that the final mixture ratio F1/F2 will not increase.

The first fluid desired flow rate signal q1 is sent to the first controller C1 where it is compared with the first flow rate signal Q1 and the first valve V1 is opened until the values of the two signals are substantially the same. Thus, when the load level changes requiring an increase in the final mixture, the second fluid flow rate is preferentially increased ensuring that the final ratio F1/F2 will not exceed the maximum ratio q1/q2.

Conversely, if during operation the load level changes, calling for a decrease in the demand for the final product, the first fluid will be preferentially decreased, again ensuring that the final ratio F1/F2 will not exceed the maximum ratio q1/q2. Upon a decrease in the demand signal Dq2 the high signal HS will not change. The second fluid desired flow rate signal q2 will initially remain unchanged while the demand signal Dq2 will decrease. Hence, the second fluid flow rate signal q2 will become the higher of the two signals. The low signal LS, on the other hand will change since the demand signal Dq2 will now be less than the second flow rate signal Q2 and the second high/low signal selector 30 will output a new low signal LS representative of the decreased demand signal Dq2. The flow rate of the first fluid F1 will be decreased causing the first flow rate signal Q1 to decrease thereby causing the second fluid desired flow rate signal q2 to decrease. This will continue until the system is once again in equilibrium and the demand signal Dq2, the second flow rate signal Q2 and the second fluid desired flow rate signal q2 are equal.

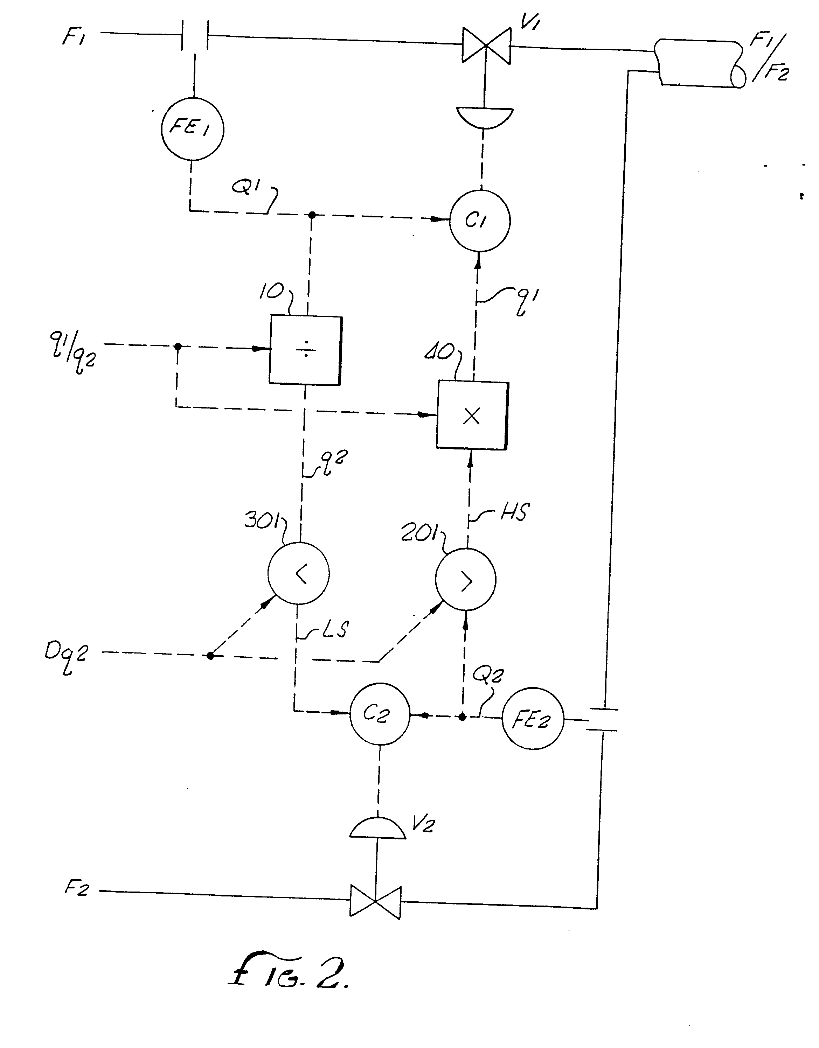

Figure 2 depicts a control system in which the present invention is employed to ensure that the final ratio F1/F2 will not fall below a desired ratio q1/q2. In this arrangement the first high/low selector 301 outputs the low signal LS and the second high/low selector 201 outputs the high signal HS. In this arrangement the first fluid will be preferentially increased upon an increase in demand and the second fluid will be preferentially decreased upon a decrease in demand.

Having described the apparatus for controlling the ratio of a fluid mixture a detailed description of a method for controlling the ratio of a fluid mixture is in order. The method comprises the steps of generating a demand signal Dq2, generating a desired ratio q1/q2, and determining the flow rate of a first fluid establishing a first flow rate signal Q1. The method of determining the flow rate of the fluid can be accomplished by any conventional means. In the preferred embodiment a flow meter FE1 is employed.

The first flow rate signal Q1 is divided by the ratio signal q1/q2 establishing a second fluid desired flow rate signal q2. The ratio signal q1/q2, as described more fully below, is established in accordance with the application to which the invention is being applied. The comparison can be accomplished by any controller that is capable of integral control as described above.

The second fluid desired flow rate signal q2 and the demand signal Dq2 are compared. If the invention is to be employed in an application in which the final ratio is not to exceed a desired ratio q1/q2, the higher of the two signals will be outputted, establishing a high signal HS. If the invention is employed in an application in which the final ratio is not to fall below the desired ratio q1/q2, the lesser of the two signals will be outputted, establishing a low signal LS.

The flow rate of the second fluid is determined establishing a second flow rate signal Q2. As in the case of the first flow rate signal Q1 this signal is established through the use of a standard flow meter. The flow rate of the second fluid is controlled such that the second flow rate signal Q2 is substantially the same as the high signal HS (or the low signal LS). In the preferred embodiment the flow rate of the second fluid is controlled by a second control valve which is comprised of a second controller C2 and a second valve V2.

Having determined the flow rate of the second fluid, the flow rate of the first fluid must be established. This is accomplished by determining the lesser of the demand signal ___ (or the greater in a minimum ratio application) and the second flow rate signal Q2 establishing a low signal LS (high signal HS), multiplying the low signal LS (high signal HS) by the ratio signal q1/q2 establishing a first fluid desired flow rate signal q1. Finally, controlling the flow rate of the first fluid such that the first flow rate signal Q1 is substantially the same as the first fluid desired flow rate signal q1. As with the second fluid the flow rate of the first fluid in the preferred embodiment is controlled by a first control valve which is comprised of a first controller and a first valve.

In order that the invention can be more easily understood a detailed description of how the invention can be applied in a coal gasification process for controlling the oxygen to fuel ratio in the manufacture of synthetic coal gas.

## Coal Gasification Control System Example

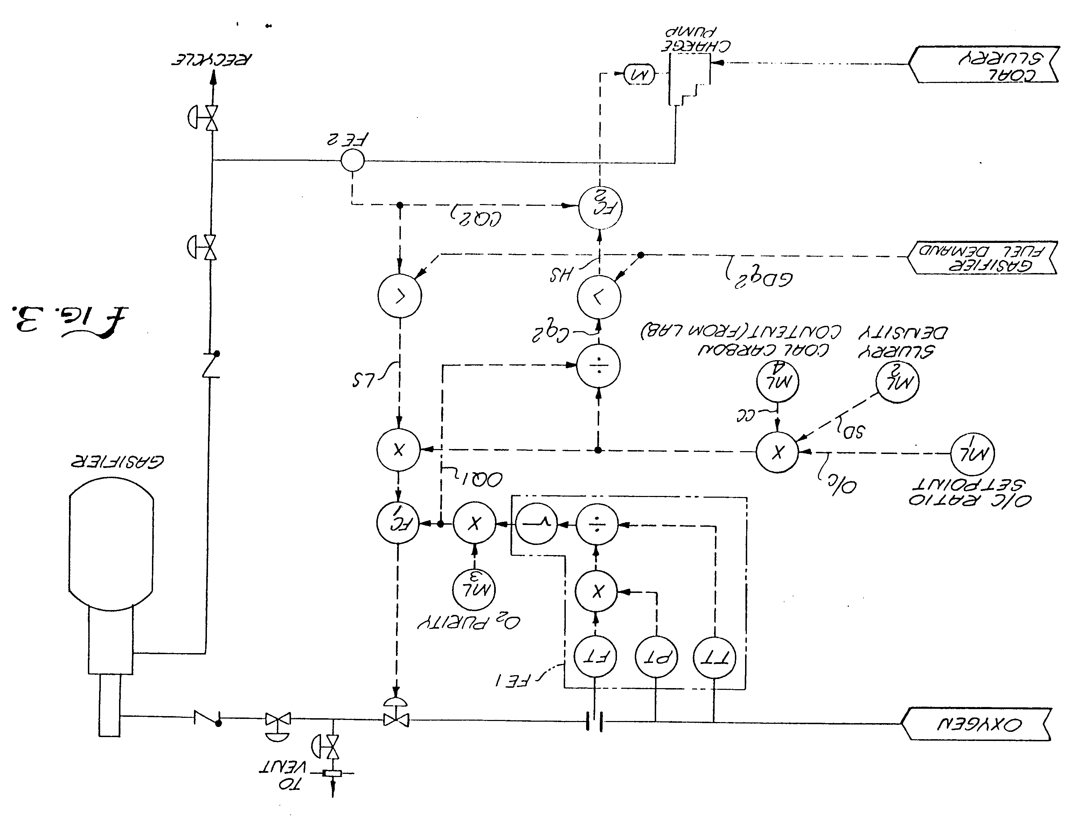

Figure 3 is a schematic of the invention incorporated in a control system for controlling the ratio of oxygen to fuel in the gasification of coal. The oxygen and the fuel, which in this application is a coal slurry, are fed to the reaction chamber in the gasifier where they are combusted. Since the temperature in the reaction chamber is highly dependent upon the oxygen/fuel ratio and temperatures exceeding the maximum temperature in a desired operating range can cause damage to the gasification equipment, it is important that the oxygen/fuel ratio not exceed the ratio that would cause the temperature to exceed the maximum reaction temperature.

In determining the maximum ratio the oxygen to carbon atom ratio is used since it provides more accurate control of the desired temperature since the density of the coal slurry, as well as the carbon content of the coal and hence the amount of heat it can generate, varies. Also the purity of the oxygen can vary.

All of the inputs, manual and on line, are inputted to a microprocessor controller. The microprocessor controller is programmed to perform the necessary calculations and provide the necessary outputs.

The desired maximum ratio O/C is manually input at ML1. The slurry density SD is manually inputted at ML2. The oxygen purity OP is manually inputted at ML3. The coal carbon content CC is manually inputted at ML4.

The temperature TT, pressure PT and the differential pressure across an orifice FT of the oxygen gas are inputted to the microprocessor controller. The microprocessor controller calculates the pressure and temperature compensated mass flow rate of the oxygen and multiplies that result by the oxygen

$ML\ 3$

$A-1$

purity, OP to obtain the pure oxygen flow rate OQ1. A separate pressure and temperature compensated flow meter FE1 can also be used to achieve the same result. The oxygen flow rate is controlled by a first controller FC1 of the microprocessor controller.

The gasifier fuel demand GDq2 is inputted to the microprocessor controller as is the coal slurry flow rate CQ2. The coal slurry flow rate CQ2 is measured by a magnetic flow meter FE2. A variable speed motor M is controlled by a second controller FC2 of the microprocessor controller.

The microprocessor controller calculates the desired coal slurry flow rate Cq2 by performing the following calculation:

$$OQ1\ /\ K2 = Cq2 \qquad\qquad Eqn.\ 1$$

where K2 = 0/C x SD x CC x K1

and K1 is the conversion constants for $ft^3/gal$; percentages; oxygen/carbon atomic weight ratio and min/hr

The microprocessor controller compares the desired coal slurry flow rate Cq2 with the gasifier fuel demand GDq2 and generates a high signal HS representative of the higher of the two signals. This signal is outputted to the second controller FC2.

The microprocessor controller compares the coal slurry flow rate CQ2 with the gasifier fuel demand GDq2 and generates a low signal LS representative of the lower of the two signals.

The microprocessor controller calculates the desired oxygen flow rate Oq1 by performing the following calculation:

$$LS \times K2 = Oq1 \qquad \text{Eqn. 2}$$

This signal is outputted to the first controller FC1.

Using such a control system the oxygen to carbon ratio will not exceed the desired maximum ratio O/C, thus ensuring that the reaction temperature will not exceed maximum temperature in the optimum temperature range.

Thus, an apparatus and method for controlling a fluid mixture ratio that can ensure that the final ratio will either not exceed or not fall below a desired ratio while still maintaining the final ratio nearly constant is disclosed. While embodiments and applications of this invention have been shown and described, as would be apparent to those skilled in the art, many more modifications and applications are possible without departing from the inventive concepts described herein. The invention, therefore, is not to be restricted except in the spirit of the appended claims.

CLAIMS

1. An apparatus for controlling a fluid mixture ratio comprising:

a means for generating a demand signal;

a means for generating a ratio signal;

a means for determining the flow rate of a first fluid establishing a first flow rate signal;

a means for determining the flow rate of a second fluid establishing a second flow rate;

a means for comparing said first flow rate signal to a ratio signal establishing a second fluid desired flow rate signal;

a means for comparing said second fluid desired flow rate signal and said demand signal and using the output to control the flow rate of the second fluid;

a means for comparing said demand signal and said second flow rate signal and comparing the output to said ratio signal establishing a first fluid desired flow rate signal;

a means for controlling the flow rate of said first fluid such that said first flow rate signal is substantially the same as said first fluid desired flow rate signal.

2. The apparatus of claim 1 wherein the means for comparing said second fluid desired flow rate signal and said demand signal comprises an analog module capable of selecting a high signal or a low signal.

3. The apparatus of claim 1 wherein the means for comparing said demand signal and said second flow rate signal comprises an analog module capable of selecting a high signal or a low signal.

4.     An apparatus for controlling a fluid mixture ratio comprising:

a means for generating a demand signal;

a means for generating a maximum ratio signal;

a means for determining the flow rate of a first fluid establishing a first flow rate signal;

a means for determining the flow rate of a second fluid establishing a second flow rate;

a means for comparing said first flow rate signal to the maximum ratio signal establishing a second fluid desired flow rate signal;

a means for comparing said second fluid desired flow rate signal and said demand signal and using the output to control the flow rate of the second fluid;

a means for comparing said demand signal and said second flow rate signal and comparing the output to said maximum ratio signal establishing a first fluid desired flow rate signal;

a means for controlling the flow rate of said first fluid such that said first flow rate signal is substantially the same as said first fluid desired flow rate signal.

5.     The apparatus of claim 4 wherein the means for comparing said second fluid desired flow rate signal and said demand signal comprises a high signal selector analog module capable of selecting a high signal.

6.     The apparatus of claim 4 wherein the means for comparing said demand signal and said second flow rate signal comprises a low signal selector analog module capable of selecting a low signal.

7.     The apparatus of claim 4 wherein the means for comparing said first flow rate signal to the maximum ratio signal establishing a second fluid desired flow rate signal comprises an analog module capable of outputting the quotient of at least two input signals.

8.     The apparatus of claim 4 wherein the means for comparing said demand signal and said second flow rate signal and comparing the output to said maximum ratio signal establishing a first fluid desired flow rate signal comprises a low signal selector analog module capable of selecting a low signal and an analog module capable of outputting the product of two inputs.

9.     An apparatus for controlling a fluid mixture ratio comprising:

a means for generating a demand signal;

a means for generating a minimum ratio signal;

a means for determining the flow rate of a first fluid establishing a first flow rate signal;

a means for determining the flow rate of a second fluid establishing a second flow rate;

a means for comparing said first flow rate signal to said minimum ratio signal establishing a second fluid desired flow rate signal;

a means for comparing said second fluid desired flow rate signal and said demand signal and using the output to control the flow rate of the second fluid;

a means for comparing said demand signal and said second flow rate signal and comparing the output to said minimum ratio signal establishing a first fluid desired flow rate signal;

a means for controlling the flow rate of said first fluid such that first flow rate signal is substantially the same as said first fluid desired flow rate signal.

10. The apparatus of claim 9 wherein the means for comparing said second fluid desired flow rate signal and said demand signal comprises a low signal selector analog module capable of selecting a low signal.

11. The apparatus of claim 9 wherein the means for comparing said demand signal and said second flow rate signal comprises a high signal selector analog module capable of selecting a high signal.

12. The apparatus of claim 9 wherein the means for comparing said first flow rate signal to said minimum ratio signal establishing a second fluid desired flow rate signal comprises an analog module capable of outputting the quotient of at least two input signals.

13. The apparatus of claim 9 wherein the means for comparing said demand signal and said second flow rate signal and comparing the output to said minimum ratio signal establishing a first fluid desired flow rate signal comprises a high signal selector analog module capable of selecting a high signal and an analog module capable of outputting the product of two inputs.

14. An apparatus for controlling a fluid mixture ratio comprising: a first control valve; a second control valve; a first high/low signal selector; a second high/low signal selector; a first flow meter; a second flow meter; a divider; and, a multiplier; wherein said output from said first flow meter is inputted to said divider and said first control valve; a first input means for inputting a ratio to said divider and said multiplier; the output of said divider is inputted to said first high/low signal selector; a second input means for inputting the demand for said second fluid to said first high/low signal selector and said second high/low signal selector; the output of said first high/low signal selector is inputted to said second control valve; the output of said second flow meter is inputted to said second control valve and said second high/low signal selector; said second control valve being capable of adjusting the flow of the second fluid such that the output of said second flow meter is substantially the same as the output of said first high/low signal selector; the output of said second high/low signal selector is inputted to said multiplier; and the output of said multiplier is inputted to said first control valve; said first control valve being capable of adjusting the flow of the first fluid such that the output of said first flow meter is substantially the same as the output of said multiplier.

15. The apparatus of claim 14 wherein said multiplier comprises an xy/z analog module with the z input set to unity.

16.   The apparatus of claim 14 wherein said divider comprises an xy/z analog module with the y input set to unity.

17.   The apparatus of claim 14 wherein said first high/low selector is set for high select and said second high/low selector is set for low select.

18.   The apparatus of claim 14 wherein said first high/low selector is set for low select and said second high/low selector is set for high select.

19.   A method for controlling a fluid mixture ratio comprising:

      generating a demand signal;

      generating a ratio signal;

      generating a first flow rate signal representative of the flow rate of a first fluid;

      generating a second flow rate signal representative of the flow rate of a second fluid;

      comparing the second flow rate signal to the ratio signal establishing second fluid desired flow rate signal;

      comparing the second fluid desired flow rate signal to the demand signal and using the output to control the flow rate of the second fluid;

      comparing the demand signal and the second flow rate signal and comparing the output to the ratio signal establishing a first fluid desired flow rate signal;

      controlling the flow rate of the first fluid such that the first flow rate signal is substantially the same as the first fluid desired flow rate signal.

20.  A method for controlling a fluid mixture ratio comprising:

generating a demand signal;

generating a maximum ratio signal;

generating a first flow rate signal representative of the flow rate of a first fluid;

generating a second flow rate signal representative of the flow rate of a second fluid;

comparing the first flow rate signal to the maximum ratio signal establishing a second fluid desired flow rate signal;

determining the greater of the second fluid desired flow rate signal and the demand signal establishing a high signal;

controlling the flow rate of the second fluid such that the second flow rate signal is substantially the same as the high signal;

determining the lesser of the demand signal and the second flow rate signal establishing a low signal;

comparing the low signal to the maximum ratio signal establishing a first fluid desired flow rate signal;

controlling the flow rate of the first fluid such that the first flow rate signal is substantially the same as the first fluid desired flow rate signal.


21.  A method for controlling a fluid mixture ratio comprising:

generating a demand signal;

generating a minimum ratio signal;

generating a first flow rate signal representative of the flow rate of a first fluid;

generating a second flow rate signal representative of the flow rate of a second fluid;

comparing the first flow rate signal to the minimum ratio signal establishing a second fluid desired flow rate signal;

determining the lesser of the second fluid desired flow rate signal and the demand signal establishing a high signal;

controlling the flow rate of the second fluid such that the second flow rate signal is substantially the same as the low signal;

determining the lesser of the demand signal and the second flow rate signal establishing a high signal;

comparing the high signal to the minimum ratio signal establishing a first fluid desired flow rate signal;

controlling the flow rate of the first fluid such that the first flow rate signal is substantially the same as the first fluid desired flow rate signal.

$f\widetilde{I}G.1.$

0211612

FIG. 2.

FIG. 3.

RECYCLE

GASIFIER

TO VENT

OXYGEN

COAL SLURRY

CHARGE PUMP

GASIFIER FUEL DEMAND

FE2

FC2

CO2

GDS2

HS

CO2

SLURRY DENSITY

COAL CARBON CONTENT (FROM LAB)

ML4
CC

ML2
SD

O/C RATIO SETPOINT

ML1
O/C

LS

X

100

FC1

O2 PURITY

ML3

FE1

FT

PT

TT

0211612